(19) Europäisches Patentamt
European Patent Office
Office européen des brevets

(11) **EP 2 862 915 B1**

(12) **EUROPEAN PATENT SPECIFICATION**

(45) Date of publication and mention
of the grant of the patent:
**09.12.2015 Bulletin 2015/50**

(51) Int Cl.:
*C10L 1/02* *(2006.01)*          *C11C 3/10* *(2006.01)*
*C12P 7/64* *(2006.01)*

(21) Application number: **13189311.7**

(22) Date of filing: **18.10.2013**

(54) **METHOD FOR MANUFACTURING BIODIESEL**

VERFAHREN ZUR HERSTELLUNG VON BIODIESEL

PROCÉDÉ DE FABRICATION DE BIODIESEL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**22.04.2015 Bulletin 2015/17**

(73) Proprietor: **Rigas Tehniska universitate
Riga 1658 (LV)**

(72) Inventors:
• **Kampars, Valdis**
  **LV-1082 Riga (LV)**
• **Kiricenko, Natalja**
  **LV-1024 Riga (LV)**

(74) Representative: **Fortuna, Jevgenijs
Foral Patent Law Office
P.O. Box 98
1050 Riga (LV)**

(56) References cited:
**GB-A- 2 478 137**

• **ABRAHAM CASAS ET AL: "Kinetics of chemical
interesterification of sunflower oil with methyl
acetate for biodiesel and triacetin production",
CHEMICAL ENGINEERING JOURNAL, ELSEVIER
SEQUOIA, LAUSANNE, CH, vol. 171, no. 3, 14 May
2011 (2011-05-14), pages 1324-1332,
XP028098403, ISSN: 1385-8947, DOI:
10.1016/J.CEJ.2011.05.037 [retrieved on
2011-05-19]**

**Description**

Technical Field

The present invention relates to the production and utilization of fuel for internal combustion engines and heating devices, in particular on such a renewable fuel, being applicable in diesel engines and heating devices provided for medium petroleum distillates, which are usually referred to as biodiesel.

Background Art

Biodiesel is produced from triglycerides (vegetable oils, algae oils, animal fats, waste oil etc.), its main ingredient is fatty acid alkyl esters and it is mainly used to produce fuel blends with refinery products. Fuel blends in practice are proved to be the most suitable for provision of diesel engine and heating devices operation in various operating modes, so their use continues to increase. Biodiesel production and utilization is a constituent part of the energy policy and allows to reduce the dependence on oil, and to improve ecological characteristics of engines and heating devices and reduce greenhouse gas emissions.

Currently biodiesel production capacity in Europe is about 10 million tons yearly, in the United States about 11 billion gallons yearly and production capacity continues to increase [1]. Biodiesel produced industrially, on a large scale, is a mixture of fatty acid methyl esters (FAME), and is produced as a result of esterification process of vegetable oils, animal fats, waste oils or other triglycerides (TG) with alcohol, which typically is methanol (MeOH). Biodiesel synthesis proceeds in accordance with reaction equation (1):

$$TG + 3\,MeOH \leftrightarrows 3\,FAME + Gly \qquad (1),$$

where it can be seen that glycerol (Gly) inevitably forms as by-product.

To improve properties of biodiesel various additives are used [2], as well as to achieve an improvement of individual fuel characteristics, other lower alcohols are used instead of methanol [3]. Among the other alcohols ethanol is most commonly is used, resulting in mixture of fatty acid ethyl esters (FAEE). Thus a variety of mixtures dominantly containing the lower alcohol esters of fatty acids in literature are referred to as biodiesel.

Generally reaction of triglycerides with methanol is carried out in the presence of homogeneous basic catalyst (sodium hydroxide, potassium hydroxide, sodium methoxide) [4]. In the process of production reflected by transesterification reaction (1) from each tonne of biodiesel produced about 100 kg of glycerol derives, normally not being used for production of fuel, and which forms as relatively low value by-product of biodiesel production. If the yield of transesterification reaction is 100% and all the FAME obtained were separated from the glycerol, the resultant FAME weight would slightly exceed the weight of the oil taken for the reaction, and when calculating the yield as the weight ratio of FAME and triglyceride taken for the reaction it would be 100,46 % (w/w). In practice even high-quality vegetable oils contain a few percents of ingredients, other than triglycerides; glycerol separation and washing of biodiesel causes losses, in the result the yield of the product does not exceed 97% [5]. With such high production volumes and the limited resources of raw materials such fuels outcome is unsatisfactory and should be improved by reducing or eliminating glycerol production. One possible solution is to maintain the current production scheme, and to transform glycerol into products, which can be used in fuel composition [6].

Another option is modification of the same synthesis scheme in such a way that outcome of the glycerol would be reduced or it would not be formed at all.

A method for the synthesis of biodiesel without glycerol at 370-500°C and at pressure of 20-60 Mpa is described in the patent application [7]. Unfortunately, the conditions for realization of the reaction in comparison with that one realized in current industry (temperature 50-60°C and atmospheric pressure) is so disadvantageous that such a solution does not serve any useful purpose due to huge capital investment and operating costs.

Patent [8] describes the technology according to which by-product - glycerol, resulting in the synthesis process, after the separation from FAME or FAEE is used for synthesis of acetals, ketals and acetic acid esters, but in some processes synthesized products further can be added to FAME or FAEE, resulting in complex of biodiesel and thus turning glycerol in a cycle of the renewable fuel production. Disadvantage of the known method is the need for two additional processes - synthesis of glycerol derivatives and its adding to FAME, in addition the synthesis of glycerol derivatives is more labour-consuming, more complicated and with smaller yields than the FAME synthesis.

The possibilities are being explored to perform FAME synthesis in such a way to avoid glycerol formation in the process of synthesis itself or to achieve its forming in much smaller quantities. The only known reaction which can be carried out at atmospheric pressure and at low temperatures, and in the result of which FAME forms from triglyceride without glycerol formation - is interesterification reaction according to equation (2). In the interesterification reaction methyl acetate (MeAc) as reagent is used instead of MeOH, and in the result of reaction triacetin (TA) as by-product occurs:

$$TG + 3\ MeAc \leftrightarrows 3\ FAME + TA \quad (2).$$

The interesterification reaction is mainly studied as a process in which enzyme catalysts [9] well can be used, however these reactions take place very slowly and the yields are low, so they do not cause practical interest [10]. Publications [11, 12] show, that the reaction with methyl acetate at low temperature and at atmospheric pressure could also be carried out quickly not using enzymatic but chemical catalysis. The results of the reaction in fact are affected by various conditions and for complete conversion of triglyceride a huge methyl acetate excess is required (molar ratio of methyl acetate/oil above 48). In these studies solid KOH, $CH_3OK$, and polyethylene glycol potassium salt (PEGK) and $CH_3OK$ solution in methanol as catalysts are used, the mechanism of the reaction and the content of the product obtained is studied, but product yield optimization with the aim to use it as fuel is not performed, as well as product testing according to one of the existing biodiesel tests is not carried out and the product output according to tests is not defined.

The objective to reduce the outcome of glycerol in synthesis process itself was set also in patents [13, 14]. These publications describe methods for production of biodiesel composition, by reaction of triglycerides with mixed alcohol composition, which in addition to methanol and/or ethanol contains ethyl acetate 1-3% and ketone 1-3%. The authors of the invention [14] assert that using proposed by them mixed spirits composition, the outcome of glycerol it is managed to reduce below 1% (in the description of invention it is said that below 50%) due to the fact that in incomprehensible way ketone prevents the formation of glycerol. Since a limited amount of ethyl acetate as a reagent in reaction (2) would reduce glycerol outcome for 3% at best, and ketone ability to influence the outcome of the glycerol in the conditions of reaction is not known, it is considered that without removing the excess of reagent, glycerol at the end of the reaction does not form separate layer and during the rinse transforms into water, and thus it is lost without fixing in a status of by-product. At the end of the reaction in the method [14] the catalyst is not neutralized, this makes possible also side reactions during rinse, where water is involved. Thus the disadvantage of this solution is not performing catalyst neutralization reaction, not performing distilling-off of the excess of reagent and not clarifying the appropriate target product outcome according to the selected tests.

GB 247813 discloses a process for the manufacture of a composition comprising: (i) one or more esters, which may be the same or different, of formula $R^1$-C(O)O-$R^2$ wherein $R^1$ is H or $C_1$-$C_7$ alkyl, $R^2$ is $C_1$-$C_8$ alkyl, and $R^1$-C(O)O-$R^2$ represents at least nine non-hydrogen atoms; with the proviso that if $R^1$ is H or $C_1$-$C_2$ alkyl, then $R^2$ is $C_5$-$C_8$ alkyl, (ii) one or more fatty acid esters, which may be the same or different, of formula $R^3$-C(O)O-$R^4$ wherein $R^3$C(O) represents the acyl residue of a $C_{10}$-$C_{24}$ fatty acid; and $R^4$ is $C_1$-$C_8$ alkyl, and (iii) one or more triesters of glycerol, which may be the same or different of formula $CH_2$(O-C(O)$R^5$)-CH(O-C(O)$R^6$)-$CH_2$(O-C(O)$R^7$) wherein $R^5$, $R^6$ and $R^7$ are each independently $R^1$ or $R^3$ as defined in (i) and (ii); wherein said alkyl groups are linear, branched or cyclic, or a combination thereof; and optionally contain one or more double bonds; and optionally, one or more carbon atoms may be replaced by oxygen atoms or bear an oxo substituent; and components (i), (ii) and (iii) each total a molar proportion of at least 5% of the mixture.

Disclosure of the Invention

The objective of the invention is to develop a method for obtaining a biodiesel, which would ensure the reduction of glycerol outcome by formation such its derivatives during the FAME synthesis (without performing additional processes), which do not impair quality of biodiesel and provide for the outcome of the product corresponding to the requirements of flash point test and carbon residue test, where the product's weight is greater than weight of the triglyceride used in the reaction. The method for manufacturing biodiesel should be such that it can be performed at low temperature and atmospheric pressure, at the presence of homogeneous alkaline catalyst, the duration of the reaction not exceeding for 1 hour. The developed method of biodiesel manufacturing contains catalyst neutralization, distilling-off of excess of reagent, filtration or centrifugation and product washing with water, if required. The objective of the invention is also to provide biodiesel outcome by weight higher than the weight of triglyceride taken for the reaction, and the conformity of characteristics of the product obtained to the requirements of biodiesel flash point test and carbon residue test.

To achieve the set objective and make a synthesis of biodiesel from triglycerides (vegetable oils, algae oils, animal fats, waste oil, etc.) in one stage with an outcome of significantly reduced by-product glycerol, performing synthesis at atmospheric pressure, at low temperature, and in a short time and obtaining the product with high yield corresponding to the requirements of flash point test and carbon residue test, in this work the interesterification reaction with methyl acetate is used according to the above-mentioned equation (2). In the result of the reaction (2) triacetin as by-product occurs, which do not significantly impair the quality of biodiesel. Since sodium methylate 30% solution in methanol is used as catalyst, reactions (1) and (2) occurs in parallel. This does not fully exclude glycerol formation, but it is significantly reduced, while keeping the technological process simple. The developed process is implemented by using the molar ratio of a reagent and oil in the range between 30 and 45 (preferably between 36 and 43) and by using 30% sodium methoxide solution as catalyst in methanol with the catalyst and oil molar ratio in the range between 0.08 and 0.2 (preferably between 0.1 and 0.15). The process is carried out at 40-60°C temperature (preferably at 50-60°C temperature), at first by adding to the heated plant oil methyl acetate and after homogenisation, during intensive stirring and maintaining the selected temperature of the reaction mass for 2-5 minutes (preferably 3-4 minutes) adding catalyst solution. After 30 to 60 min stirring (preferably 40 to 45 min) heating is switched off and the reaction is stopped by adding phosphoric acid in an amount required for neutralization of the catalyst. The excess of reagents is distilled off, filtered and, optionally - the product obtained is washed with water. The outcome of the product is determined and product flash point test and carbon residue test are carried out according to standards EN ISO 3679 and ASTM D664, respectively. As very important these tests are chosen for the following reasons: (i) flash point test is very sensitive to the presence of reagents (methyl acetate, methanol) in the product. Compliance with this test ensures that the excess reagent is removed and the product yield is set correctly; (ii) carbon residue test characterizes the propensity for combustion deposits formation, and compliance with this test ensures that the total glycerol content of the product is low, the use of the product will not cause problems in the engine, and product yield is not incorrectly increased because the glycerol is not separated.

The results of experiments performed according to the proposed method are summarized in table 1. In the course of experiments the process conditions are varied, by changing reactants ratio, amount of catalyst and the time for its adding, as well as temperature and duration of the reaction.

Table 1

The summary of the results of the developed method

| No. | Oil | RTOMR* | KTOMR** | Temperature, °C | P***, min | Time, min | Washing | Yield, % w/w | Flash point EN ISO 3679, °C | Carbon residue D664, % w/w |
|---|---|---|---|---|---|---|---|---|---|---|
| 1 | R | 36.3 | 0.104 | 50 | 2 | 30 | - | 118 | 114 | 0.047 |
| 2 | R | 36.3 | 0.104 | 50 | 2 | 30 | x | 113 | 167 | 0.04 |
| 3 | R | 43 | 0.109 | 60 | 4 | 40 | - | 119 | 113 | 0.027 |
| 4 | R | 43 | 0.109 | 60 | 4 | 40 | x | 112 | 177 | 0.017 |
| 5 | R | 43 | 0.13 | 40 | 3 | 50 | - | 120 | 115 | 0.042 |
| 6 | R | 43 | 0.13 | 40 | 3 | 50 | x | 115 | 173 | 0.036 |
| 7 | R | 30 | 0.098 | 50 | 3 | 50 | - | 113 | 89 | 0.08 |
| 8 | R | 30 | 0.098 | 50 | 3 | 50 | x | 104 | 179 | 0.05 |
| 9 | R | 45 | 0.08 | 50 | 5 | 60 | - | 116 | 115 | 0.046 |
| 10 | R | 45 | 0.08 | 50 | 5 | 60 | x | 109 | 176 | 0.03 |
| 11 | S | 40 | 0.2 | 50 | 3 | 45 | | 115 | 117 | 0.04 |
| 12 | S | 40 | 0.2 | 50 | 3 | 45 | x | 108 | 156 | 0.03 |

R-rapeseed, S-sunflower, *RTOMR - molar ratio of reagent and oil, ** KTOMR - molar ratio of catalyst and oil, P*** - time of adding of catalyst solution, x- product washing is performed.

In line with the requirement of biodiesel standard EN14214 flash point accordingly to test EN ISO 3679 must be higher than 101°C, but carbon residue in line with the requirement of biodiesel standard ASTM D6751-08 accordingly to test D664 must be lower than 0.05 %.

Table 2 gives the comparison of the best results of the proposed method with the prior art technical solutions.

Table 2

| The comparison of the known technical solutions performed at atmospheric pressure and the developed method | | | | | | | |
|---|---|---|---|---|---|---|---|
| Technical solution | Reagent and its amount, RTOMR* | Catalyst and its amount, KTOMR** | Tem perature, °C | Time, min | Yield, % w/w | Flash point EN ISO 3679, °C | Carbon residue D664, % w/w |
| US8207362 | Composition, 275ml per 1L oil. Content: Methanol 96%; Ketone 1%; Ethyl acetate 3%. Without methanol distilling-off and washing P362BD-A-0,3M | KOH, 14 g per 1L oil | 40 | 20 | 109.3 While standing glycerol layer is forming | ≤ 30 | 0.037 |
| US8207362 | Composition, 275ml per 1L oil. Content: Methanol 96%; Ketone 1%; Ethyl acetate 3%. After methanol distilling-off P362BD-A-0.50 | KOH, 14 g per 1L oil | 40 | 20 | 97.0 | 144 | 0.065 |
| US8207362 | Composition, 275ml per 1L oil. Content: Methanol 96%; Ketone 1%; Ethyl acetate 3%. After washing P362BD-A-M | KOH, 14 g per 1L oil | 40 | 20 | 93.6 | 181 | 0.015 |
| US8207362 | Composition, 275ml per 1L oil. Content: Methanol 3%; Ethanol 94%; Ketone 1%; Ethyl acetate 2%. Without ethanol distilling-off and washing P362BD-B-0,3 | KOH, 14 g per 1L oil | 40 | 20 | 126 (Glycerol release is not observe d) | ≤ 30 | 2.01 |
| US8207362 | Composition, 275ml per 1L oil. Content: Methanol 3%; Ethanol 94%; Ketone 1%; Ethyl acetate 2%. After distilling-off P362BD-B-0,5 | KOH, 14 g per 1L oil | 40 | 20 | 114 | 70 | 2.0 |
| US8207362 | Composition, 275ml per 1L oil. Content: Methanol 3%; Etanol 94%; Ketone 1%; Ethyl acetate 2% After washing P362BD-B-M | KOH, 14 g per 1L oil | 40 | 20 | 93.4 | 91 | 1.14 |
| The developed method (example 3) | Methyl acetate, RTOMR*=43 | Sodium methoxide 30% solution in methanol KTOMR ** =0.109 | 60 | 40 | 119 | 113 | 0.027 |

(continued)

| The comparison of the known technical solutions performed at atmospheric pressure and the developed method | | | | | | | |
|---|---|---|---|---|---|---|---|
| Technical solution | Reagent and its amount, RTOMR* | Catalyst and its amount, KTOMR** | Tem perature, °C | Time, min | Yield, % w/w | Flash point EN ISO 3679, °C | Carbon residue D664, % w/w |
| The developed method (example 5) | Methyl acetate, RTOMR*=43 | Sodium methoxide 30% solution in methanol KTOMR** =0.13 | 40 | 50 | 120 | 115 | 0.042 |
| *RTOMR - molar ratio of the reagent and oil, ** KTOMR - molar ratio of the catalyst and oil. | | | | | | | |

According to the biodiesel standard EN14214, flash point according to test EN ISO 3679 shall be above 101°C, and carbon residue levels shall meet the requirements of the standard ASTM D6751-08 and, in accordance with the test D664, must be less than 0.05 %.

According to the proposed invention the selected amount of plant oil is introduced in a flask with a reflux condenser, mixer and the system for the provision of reaction mixture temperature and heated up to 40-60°C temperature (preferably 50-60°C). While stirring and maintaining the selected reaction mass temperature of 40-60°C (preferably 50-60°C), reagent methyl acetate is added in an amount that provides a reagent and oil molar ratios ranging from 30 to 45 (preferably 36-43). While intensively stirring and maintaining the selected reaction mass temperature during 2-5 minutes (preferably 3-4 min) such a volume of the catalytic sodium methoxide solution in methanol 30% is added, which provides a catalyst and oil molar ratio of 0.08 to 0.2 (preferably 0.1 to 0.15) and the reaction mass is continued stirring for 40-60 minutes (preferably 40-45 min). The heating of the reactions mass is stopped, the phosphoric acid in the quantity required for neutralization of the catalyst is added, the reagent remainder is distilled-off and the product obtained is left without stirring for 20 minutes. The product obtained is filtered and, optionally - cleaned by washing with distilled water and dried. The amount of the product is determined and testing according to standards EN ISO 3679 and ASTM D664 is performed. Results of the implementation of the invention are summarized in the Table 1, and Table 2 presents its comparison with the known solutions. As can be seen from data in the Table 2 the proposed method allows achieving the defined objectives, while in case if the cited prior art is used, the objective is not reached. Washing improves product quality however reduces its outcome. It is not necessary in all cases.

Examples of the Implementation of the Invention

The following examples illustrate the nature of the invention, but in no way limit its use. Results of the implementation of the invention are summarized in the Table 1.

Example 1. To 200 ml of rapeseed oil at temperature of 50°C add 600 ml methyl acetate. During intensive stirring for 2 minutes gradually add 4 ml of 30% sodium methoxide solution in methanol. Continue intensive stirring for 30 min, maintaining the temperature 50°C. Catalyst is neutralized with an appropriate amount of phosphoric acid, distilled-off the excess reagent, and left for 20 minutes without stirring. It is filtered or centrifuged. The resulting product is weighed and tested in accordance with the standards EN ISO 3679 and ASTM D664. The yield is calculated as mass ratio of the product obtained and the weight of oil taken for the reaction. The results of measurements: the yield 118%, flash point 114°C, carbon residue 0.047%.

Example 2. To 200 ml of rapeseed oil at temperature of 50°C add 600 ml methyl acetate. During intensive stirring for 2 minutes gradually add 4 ml of 30% sodium methoxide solution in methanol. Continue intensive stirring for 30 min, maintaining the temperature 50°C. Catalyst is neutralized with an appropriate amount of phosphoric acid, distilled-off the excess reagent, and left for 20 minutes without stirring. It is filtered or centrifuged. The resulting product is washed with distilled water, weighed and tested in accordance with the standards EN ISO 3679 and ASTM D664. The yield is calculated as mass ratio of the product obtained and the weight of oil taken for the reaction. The results of measurements: the yield 113 %, flash point 167°C, carbon residue 0.04%.

Example 3. To 200 ml of rapeseed oil at temperature of 60°C add 710 ml methyl acetate. During intensive stirring for 4 minutes gradually add 4.2 ml of 30% sodium methoxide solution in methanol. Continue intensive stirring for 40 min, maintaining the temperature 60°C. Catalyst is neutralized with an appropriate amount of phosphoric acid, distilled-off the excess reagent, and left for 20 minutes without stirring, then it is filtered or centrifuged. The resulting product is weighed and tested in accordance with the standards EN ISO 3679 and ASTM D664. The yield is calculated as mass ratio of the product obtained and the weight of oil taken for the reaction. The results of measurements: the yield 119%, flash point 113°C, carbon residue 0.027%.

Example 4. To 200 ml of rapeseed oil at temperature of 60°C add 710 ml methyl acetate. During intensive stirring for 4 minutes gradually add 4.2 ml of 30% sodium methoxide solution in methanol. Continue intensive stirring for 40 min, maintaining the temperature 60°C. Catalyst is neutralized with an appropriate amount of phosphoric acid, distilled-off the excess reagent, and left for 20 minutes without stirring, then it is filtered or centrifuged. The resulting product is washed with distilled water, weighed and tested in accordance with the standards EN ISO 3679 and ASTM D664. The yield is calculated as mass ratio of the product obtained and the weight of oil taken for the reaction. The results of measurements: the yield 112%, flash point 177°C, carbon residue 0.017%.

Example 5. To 200 ml of rapeseed oil at temperature of 40°C add 710 ml methyl acetate. During intensive stirring for 3 minutes gradually add 5.01 ml of 30% sodium methoxide solution in methanol. Continue intensive stirring for 50 min, maintaining the temperature 40°C. Catalyst is neutralized with an appropriate amount of phosphoric acid, distilled-off the excess reagent, and left for 20 minutes without stirring, then it is filtered or centrifuged. The resulting product is weighed and tested in accordance with the standards EN ISO 3679 and ASTM D664. The yield is calculated as mass ratio of the product obtained and the weight of oil taken for the reaction. The results of measurements: the yield 120%, flash point 115°C, carbon residue 0.042%.

Example 6. To 200 ml of rapeseed oil at temperature of 40°C add 710 ml methyl acetate. During intensive stirring for 3 minutes gradually add 5.01 ml of 30% sodium methoxide solution in methanol. Continue intensive stirring for 50 min, maintaining the temperature 40°C. Catalyst is neutralized with an appropriate amount of phosphoric acid, distilled-off the excess reagent, and left for 20 minutes without stirring, then it is filtered or centrifuged. The resulting product is washed with distilled water, weighed and tested in accordance with the standards EN ISO 3679 and ASTM D664. The yield is calculated as mass ratio of the product obtained and the weight of oil taken for the reaction. The results of measurements: the yield 115%, flash point 173°C, carbon residue 0.036%.

Example 7. To 200 ml of rapeseed oil at temperature of 50°C add 500 ml methyl acetate. During intensive stirring for 3 minutes gradually add 3.8 ml of 30% sodium methoxide solution in methanol. Continue intensive stirring for 50 min, maintaining the temperature 50°C. Catalyst is neutralized with an appropriate amount of phosphoric acid, distilled-off the excess reagent, and left for 20 minutes without stirring, then it is filtered or centrifuged. The resulting product is weighed and tested in accordance with the standards EN ISO 3679 and ASTM D664. The yield is calculated as mass ratio of the product obtained and the weight of oil taken for the reaction. The results of measurements: the yield 117%, flash point 89°C, carbon residue 0.08%.

Example 8. To 200 ml of rapeseed oil at temperature of 50°C add 500 ml methyl acetate. During intensive stirring for 3 minutes gradually add 3.8 ml of 30% sodium methoxide solution in methanol. Continue intensive stirring for 50 min, maintaining the temperature 50°C. Catalyst is neutralized with an appropriate amount of phosphoric acid, distilled-off the excess reagent, and left for 20 minutes without stirring, then it is filtered or centrifuged. The resulting product is washed with distilled water, weighed and tested in accordance with the standards EN ISO 3679 and ASTM D664. The yield is calculated as mass ratio of the product obtained and the weight of oil taken for the reaction. The results of measurements: the yield 104%, flash point 179°C, carbon residue 0.05%.

Example 9. To 200 ml of rapeseed oil at temperature of 50°C add 743 ml methyl acetate. During intensive stirring for 5 minutes gradually add 3.1 ml of 30% sodium methoxide solution in methanol. Continue intensive stirring for 60 min, maintaining the temperature 50°C. Catalyst is neutralized with an appropriate amount of phosphoric acid, distilled-off the excess reagent, and left for 20 minutes without stirring, then it is filtered or centrifuged. The resulting product is weighed and tested in accordance with the standards EN ISO 3679 and ASTM D664. The yield is calculated as mass ratio of the product obtained and the weight of oil taken for the reaction. The results of measurements: the yield 116%, flash point 115 °C, carbon residue 0,046%.

Example 10. To 200 ml of rapeseed oil at temperature of 50°C add 743 ml methyl acetate. During intensive stirring for 5 minutes gradually add 3.1 ml of 30% sodium methoxide solution in methanol. Continue intensive stirring for 60 min, maintaining the temperature 50°C. Catalyst is neutralized with an appropriate amount of phosphoric acid, distilled-off the excess reagent, and left for 20 minutes without stirring, then it is filtered or centrifuged. The resulting product is washed with distilled water, weighed and tested in accordance with the standards EN ISO 3679 and ASTM D664. The yield is calculated as mass ratio of the product obtained and the weight of oil taken for the reaction. The results of measurements: the yield 109%, flash point 176°C, carbon residue 0,03%.

Example 11. To 200 ml of sunflower oil at temperature of 50°C add 661 ml methyl acetate. During intensive stirring for 3 minutes gradually add 7.7 ml of 30% sodium methoxide solution in methanol. Continue intensive stirring for 45 min, maintaining the temperature 50°C. Catalyst is neutralized with an appropriate amount of phosphoric acid, distilled-off the excess reagent, and left for 20 minutes without stirring, then it is filtered or centrifuged. The resulting product is weighed and tested in accordance with the standards EN ISO 3679 and ASTM D664. The yield is calculated as mass ratio of the product obtained and the weight of oil taken for the reaction. The results of measurements: the yield 115 %, flash point 117°C, carbon residue 0.04%.

Example 12. To 200 ml of sunflower oil at temperature of 50°C add 661 ml methyl acetate. During intensive stirring for 3 minutes gradually add 7.7 ml of 30% sodium methoxide solution in methanol. Continue intensive stirring for 45 min, maintaining the temperature 50°C. Catalyst is neutralized with an appropriate amount of phosphoric acid, distilled-off the excess reagent, and left for 20 minutes without stirring, then it is filtered or centrifuged. The resulting product is washed with distilled water, weighed and tested in accordance with the standards EN ISO 3679 and ASTM D664. The yield is calculated as mass ratio of the product obtained and the weight of oil taken for the reaction. The results of measurements: the yield 108 %, flash point 156°C, carbon residue 0.03%.

The Substantiation of Industrial Applicability of the Invention

The invention is applicable for renewable fuel production from the triglyceride-containing raw materials (vegetable oils, animal fats, algae oils and waste fats of food industry) for use in diesel engines and heating devices provided for medium petroleum distillates, without any by- product glycerol formation. Industrial application of the invention does not require development of technological lines, which differ from those ones used for biodiesel production from triglycerides. The currently used biodiesel production method is based on the reaction of methanol with triglycerides at atmospheric pressure under homogeneous alkaline catalysis conditions (catalyst sodium hydroxide, potassium hydroxide or sodium methoxide 30% solution in methanol) and in the result of this process yield of 10% glycerol as by-product is forming. The productions process involves the neutralization of excess of catalyst, removing of reagent excess, sedimentation or centrifugation and washing the resulting product. The proposed process is characterized in that the methyl acetate as reagent is used instead of methanol and triacetin instead of glycerol is forming, which does not impair the quality of the fuel. Consequently, the developed method does not contain the glycerol separation phase and the outcome of fuel significantly increases.

Sources of Information

[1]http://www.biofuelsp.eu/global overview.html#prod
[2] A.S. Ramadhas, S. Jayaraj, C. Muraleedharan. Experimental investigations on diethyl ether as fuel additive in biodiesel engine. International Journal of Global Energy Issues, 2008, vol. 29, issue 3, pages 329-336.
[3] G.Knothe. Dependence of biodiesel fuel properties on the structure of fatty acid alkyl esters. Fuel processing technology, 86
[4] A.Casas, M.Ramos, A.Perez. New trends in biodiesel production: Chemical interesterification of sunflower oil with methyl acetate. Biomass and bioenergy, 2011, 35, 1702-1709.
[5] K.Malinš. Rapšu ellas paresterificešanu ietekmejosie faktori un to optimizacija. Autoreferats, RTU, 2012, 32 lpp.
[6] M.Pagliaro, M.Rossi. The Future of Glycerol (RSC Green Chemistry), Royal Society of Chemistry, Second Edition, 2010, 192 p.
[7] WO 2005017075.
[8] US 7637969.
[9] L.Fjerbaek, K.V. Christensen, B.Norddahl. A Review of the Current State of Biodiesel Production Using Enzymatic Transesterification. Biotechnology and Bioengineering, Vol. 102, No. 5, 2009, 1298-1315.
[10] Xu Y, Du W, Liu D. Study on the kinetics of enzymatic interesterification of triglycerides for biodiesel production with methyl acetate as the acyl acceptor. J Mol Catal B Enzym. 2005;32:241e5. (2005), pp.1059-1070.
[11] A.Casas, M.Ramos, A.Perez. New trends in biodiesel production: Chemical interesterification of sunflower oil with methyl acetate. Biomass and bioenergy, 35 (2011), 1702-1709.
[12] A.Casas, M.Ramos, A.Perez. Kinetics of chemical interesterification of sunflower oil with methyl acetate for biodiesel and triacetin production. Chemical Engineering Journal 171 (2011) 1324- 1332.
[13] US 7553982.
[14] US 8207362.

**Claims**

1. A method for manufacturing biodiesel from plant oil in one stage with simultaneous glycerol conversion into its derivatives, where the method consists of the following sequential steps:

   (i) heating up of a plant oil to 40-60°C temperature, preferably to 50-60°C;
   (ii) maintaining the selected reactions mass temperature and adding reagent - methyl acetate in an amount, which provides a reagent and oil molar ratios ranging from 30 to 45, preferably from 36 to 43;
   (iii) while stirring and maintaining the selected reaction mass temperature, adding the catalyst - sodium methoxide solution in methanol at volume, which provides catalyst and oil molar ratios ranging from 0.08 to 0.2, preferably from 0.1 to 0.15;
   (iv) performing synthesis, preferably continuing stirring the reaction mass at desired temperature during 30-60 min, preferably during 40-45 min;
   (v) stopping the reaction by adding phosphoric acid in the amount required for neutralization of catalyst, distilling-off, filtration or centrifugation, and, optionally - cleaning the product obtained by washing with distilled water and drying.

2. The method according to claim 1, where the catalyst is sodium methoxide 30% solution in methanol.

**Patentansprüche**

1. Einstufiges Verfahren zur Herstellung von Biodiesel aus Pflanzenöl bei gleichzeitiger Umwandlung von Glycerin in seine Derivate, wobei das Verfahren aus den nachgenannten aufeinanderfolgenden Schritten besteht:

   (i) Erwärmen des Pflanzenöls auf eine Temperatur von 40-60 °C, vorzugweise auf 50-60 °C;
   (ii) Beibehaltung der gewählten Reaktionsmassetemperatur und Zugabe eines Reagenz in Form von Methylacetat in einer Menge, die ein Reagens- und Öl-Molverhältnis im Bereich von 30 bis 45, vorzugsweise 36 bis 43 gewährleistet;
   (iii) Unter Rühren und Aufrechterhalten der gewählten Reaktionsmassetemperatur wird der Katalysator bestehend aus Natriummethylatlösung in Methanol zugegeben, wobei das Katalysator- und Öl-Molverhältnis im Bereich von 0,08 bis 0,2, vorzugsweise von 0,1 bis 0,15 liegen.
   (iv) Durchführen der Synthese, vorzugsweise durch fortgesetztes Rühren der Reaktionsmasse bei einer gewünschten Temperatur für die Dauer von 30 bis 60 Minuten, vorzugsweise 40 bis 45 Minuten.
   (v) Stoppen der Reaktion durch Zugabe von Phosphorsäure in der für die Neutralisation des Katalysators erforderlichen Menge, Abdestillieren, Filtern oder Zentrifugieren und gegebenenfalls Reinigen des Produkts durch Waschen mit destilliertem Wasser und Trocknen.

2. Verfahren nach Anspruch 1, wobei der Katalysator aus einer 30%igen Natriummethoxidlösung in Methanol besteht.

**Revendications**

1. Procédé de fabrication de biodiesel à partir d'une huile végétale en une étape avec conversion simultanée de glycérol en ses dérivés, où le procédé est constitué des étapes séquentielles suivantes :

   (i) chauffage d'une huile végétale à une température de 40 à 60 °C, de préférence 50 à 60 °C ;
   (ii) maintien des températures sélectionnées de masse réactionnelle et ajout de réactif, de l'acétate de méthyle, en une quantité qui fournit des rapports molaires en réactif et en huile allant de 30 à 45, de préférence de 36 à 43 ;
   (iii) tout en agitant et en maintenant la température sélectionnée de masse réactionnelle, ajout du catalyseur, une solution de méthylate de sodium dans du méthanol, au volume, ce qui fournit des rapports molaires en catalyseur et en huile allant de 0,08 à 0,2, de préférence de 0,1 à 0,15 ;
   (iv) exécution de la synthèse, de préférence en poursuivant l'agitation de la masse réactionnelle à la température souhaitée pendant 30 à 60 min, de préférence pendant 40 à 45 min ;
   (v) arrêt de la réaction par ajout d'acide phosphorique dans la quantité requise pour la neutralisation du catalyseur, élimination par distillation, filtration ou centrifugation et, éventuellement, nettoyage du produit obtenu par lavage avec de l'eau distillée et séchage.

**2.** Procédé selon la revendication 1, où le catalyseur est une solution à 30 % de méthylate de sodium dans du méthanol.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 247813 A
- US 8207362 B
- WO 2005017075 A
- US 7637969 B
- US 7553982 B

### Non-patent literature cited in the description

- **A.S. RAMADHAS ; S. JAYARAJ ; C. MURALEED-HARAN.** Experimental investigations on diethyl ether as fuel additive in biodiesel engine. *International Journal of Global Energy Issues,* 2008, vol. 29 (3), 329-336
- **G.KNOTHE.** Dependence of biodiesel fuel properties on the structure of fatty acid alkyl esters. *Fuel processing technology,* 86
- **A.CASAS ; M.RAMOS ; A.PEREZ.** New trends in biodiesel production: Chemical interesterification of sunflower oil with methyl acetate. *Biomass and bioenergy,* 2001, vol. 35, 1702-1709
- The Future of Glycerol (RSC Green Chemistry). **M.PAGLIARO ; M.ROSSI.** Royal Society of Chemistry. 2010, 192
- **L.FJERBAEK ; K.V. CHRISTENSEN ; B.NORD-DAHL.** A Review of the Current State of Biodiesel Production Using Enzymatic Transesterification. *Biotechnology and Bioengineering,* 2009, vol. 102 (5), 1298-1315
- **XU Y ; DU W ; LIU D.** Study on the kinetics of enzymatic interesterification of triglycerides for biodiesel production with methyl acetate as the acyl acceptor. *J Mol Catal B Enzym.,* 2005, vol. 32, 241e5
- *J MOL CATAL B ENZYM.,* 2005, 1059-1070
- **A.CASAS ; M.RAMOS ; A.PEREZ.** New trends in biodiesel production: Chemical interesterification of sunflower oil with methyl acetate. *Biomass and bioenergy,* 2011, vol. 35, 1702-1709
- **A.CASAS ; M.RAMOS ; A.PEREZ.** Kinetics of chemical interesterification of sunflower oil with methyl acetate for biodiesel and triacetin production. *Chemical Engineering Journal,* 2011, vol. 171, 1324-1332